# EUROPÄISCHE PATENTANMELDUNG

(11) **EP 1 965 092 A1**
(43) Veröffentlichungstag der Anmeldung: **03.09.2008**
(21) Anmeldenummer: 08003655.1
(22) Anmeldetag: 28.02.2008
(51) Int. Cl.: F16D 55/30, B30B 15/10

(54) **Sicherheitsbremse**

(30) Priorität: 01.03.2007 DE 102007010398
(71) Anmelder: Ortlinghaus-Werke GmbH, 42929 Wermelskirchen (DE)
(72) Erfinder: Seeger, Herbert, 32547 Bad Oeynhausen (DE)
(74) Vertreter: Füssel, Michael

(57) **Zusammenfassung**

Die Erfindung betrifft eine Sicherheitsbremse in Scheibenbauart, bei welcher die Federpakete zu beiden Seiten der Bremsscheibe vorgesehen sind.
Die Federpakete bestehen jeweils auf Tellerfedern (7).

## Beschreibung

Die vorliegende Erfindung betrifft eine Sicherheitsbremse nach Oberbegriff des Hauptanspruchs.

Derartige Sicherheitsbremsen dienen dem Zweck, eine vorbekannte Last, die in vorbestimmter weise beweglich angetrieben ist, in bestimmten Betriebssituationen zu Halten.

Ein Anwendungsbeispiel der Erfindung ist aus der Pressentechnik bekannt, bei welcher der angehobene Pressenstößel während einer Stillstandsphase gehalten werden muss, um ein neues Werkstück einzulegen.

Obwohl dies keine Eischränkung der Erfindung auf die Pressentechnik ist, soll die Sicherheitsbremse vorwiegend im Bereich der Pressentechnik zum Einsatz kommen.

Hintergrund der Erfindung ist die Überlegung, dass die an sich bewährte Pressentechnik, bei welcher der Pressenstößel über ein Schwungrad angetrieben wird, durch den Einsatz entsprechend steuerbarer Servomotoren zukünftig ohne Verwendung eines Schwungrads auskommt.

Gleichwohl muss sichergestellt sein, dass die Sicherheitsbremse im Stande ist, die angehobene Last sicher zu halten.

Allerdings muss das bekannte Konzept der federbelasteten Sicherheitsbremse so umstrukturiert werden, dass unter Aufrechterhaltung des Sicherheitsaspektes eine einfachere und kostengünstigere Bauweise gefunden wird.

Es ist deshalb Aufgabe der vorliegenden Erfindung, die bekannte Sicherheitsbremse so weiterzubilden, dass sie trotz einfacherer und kostengünstigerer Bauweise ihrer Sicherheitsanforderung in vollem Umfang gerecht wird.

Diese Aufgabe löst die Erfindung mit den Merkmalen des Hauptanspruchs.

Aus der Erfindung ergibt sich der Vorteil, dass die jeweils notwendige Bremskraft über die einfache Variation von Tellerfedern im Hinblick auf deren Zusammenschaltung und Anordnung bei ein- und derselben Bauweise ermöglicht ist.

Die Sicherheitsbremse kann folglich für eine Vielzahl unterschiedlicher Dimensionierungen jeweils identische Bauform aufweisen, wobei allerdings dann im Hinblick auf die jeweils notwendige Haltekraft die Tellerfedern entsprechend zu variieren sind.

Die Tellerfedern können, da sie sehr platzsparend sind, einfach in Reihe oder parallel geschaltet werden, je nach Bedarf und ermöglichen bereits auf geringstem Federweg die erforderlichen Haltekräfte der Sicherheitsbremse, insbesondere auch weil die zur Sicherheitsbremse gehörige Presse "nur" noch über einen Servomotor und nicht mehr über ein zugehöriges Schwungrad angetrieben wird.

Die Sicherheitsbremse kann daher entsprechend klein dimensioniert werden, denn sie braucht auch mehr die bislang erforderliche hohe Bremsleistung zum Abbremsen des Schwungrads aufzubringen.

Um trotzdem eine möglichst hohe Bremswirkung zu erzielen, wird darüber hinaus vorgeschlagen, die Tellerfedern, einzeln oder als Federpakete, am Außenumfang der Bremsscheibe anzuordnen.

Dabei sollen die Wirkungslinien der resultierenden Federkräfte unter Berücksichtigung der wirksamen Breite des Bremsbelags nicht wesentlich mehr als etwa die Hälfte dieser Breite vom Außenumfang der Bremsscheibe beabstandet sein.

Auf diese Weise wird das auf die Bremsscheibe wirkende Bremsmoment optimal in Bremsleistung umgesetzt, und auch die Haltekräfte zwischen Bremsbelag und Bremsscheibe erreichen ihren größtmöglichen Wert.

Die erfindungsgemäße Sicherheitsbremse kann sowohl an schwimmend beweglichen Bremsengestellen als auch an starr gelagerten Bremsengestellen Anwendung finden.

Hierfür sind Ausführungsbeispiele angegeben.

Werden jeweils Gruppen von Tellerfedern so angeordnet, dass sie sich mit gemeinsamer Kraftwirkungslinie bezüglich der Bremsscheibe gegenüberliegen, treten nur noch gegeneinander gerichtete resultierende Kräfte auf die Bremsscheibe auf und es erfolgt kein Verbiegen der Bremsscheibe.

Die Anordnung der Tellerfedern erfolgt zweckmäßigerweise entlang einer Axialführung, parallel zur Drehachse der Bremsscheibe.

Zu diesem Zweck wird vorgeschlagen, Ausnehmungen in den Ankerplatten der Bremsbeläge oder dem Bremsengestell vorzusehen, in welchen die Tellerfedern mit ihrem jeweiligen Au-βenumfang axial geführt sind.

Diese Art von Federnestern können zweckmäßigerweise entweder ringsegmentförmig entlang der Bremsscheibe in einer Vielzahl angeordnet sein oder auf einem Teilkreisdurchmesser der Bremsscheibe in Form eines geschlossenen Ringes.

Über die Anzahl dieser Federnester läßt sich insoweit auch die jeweils notwendige Bremskraft einschließlich des zugehörigen Sicherheitsabstandes variieren.

Werden die Federnester auf der Linie eines geschlossenen Kreises mit zueinander gleichen Winkelabständen angeordnet, ergibt sich eine umfangsmäßig gleich verteilte Druckbelastung auf die Bremsscheibe mit geringem Verschleiß.

Zum Lüften der Sicherheitsbremse sollen darüber hinaus Plungerkolben mit zugehörigen Zylindereinheiten vorgesehen sein.

Die Plungerkolben sind abgelängte Stücke aus Rundstangenmaterial, die sich auf der einen Seite der Bremsscheibe am Bremsengestell abstützen während die Zylindereinheiten sich auf der anderen Seite der Bremsscheibe am Bremsengestell abstützen.

Die Kombination dieser Plungerkolben mit den Zylindereinheiten ergibt den Vorteil einer einfachen Fertigung, insbesondere da auch mehrere Plungerkolben mit zugehörigen Zylindereinheiten vorgesehen sein können und auf diese Weise die zum Lüften der Bremse notwendigen Drücke trotz hoher Anpresskräfte durch die Tellerfedern gering bleiben können.

Von besonderem Vorteil ist eine Weiterbildung, bei welcher das Bremsengestell ebenfalls kreisringförmig ausgestaltet ist und über einen Außendurchmesser verfügt, der größer als der Außendurchmesser der Bremsscheibe ist.

In dem Ringbereich zwischen dem Außendurchmesser der Bremsscheibe und dem Außendurchmesser des Bremsengestells lassen sich dann Plungerkolben und Zylindereinheiten jeweils zwischen jeweils zwei Paaren von benachbarten Tellerfederpaketen anordnen, so dass ein Plungerkolben mit zugehöriger Zylindereinheit jeweils zum Lüften von insgesamt vier benachbarten Federnestern, jeweils zwei auf einer Seite der Bremsscheibe, ausgelegt werden muss.

Im Folgenden wird die Erfindung anhand von Ausführungsbeispielen näher erläutert.

Es zeigen:
- Fig.1: ein Ausführungsbeispiel der Erfindung in axialer Aufsicht;
- Fig.2a: die Anordnung der Tellerfedern im Detail, schwimmende Lagerung;
- Fig.2b: die Anordnung der Tellerfedern im Detail, starre Lagerung;
- Fig.3: die Anordnung der Plungerkolben im Detail;
- Fig.4: Teilansicht einer Sicherheitsbremse, ringsegmentförmig.

Sofern im Folgenden nichts anderes gesagt ist, gilt die folgende Beschreibung stets für alle Figuren.

Die Figuren zeigen eine Sicherheitsbremse 1.

Kernstück der Sicherheitsbremse 1 ist eine drehbar gelagerte Bremsscheibe 2, deren Drehbewegung es bedarfsweise abzubremsen gilt.

Zu diesem zweck ist beidseitig der Bremsscheibe 2 ein Bremsengestell 3 angeordnet.

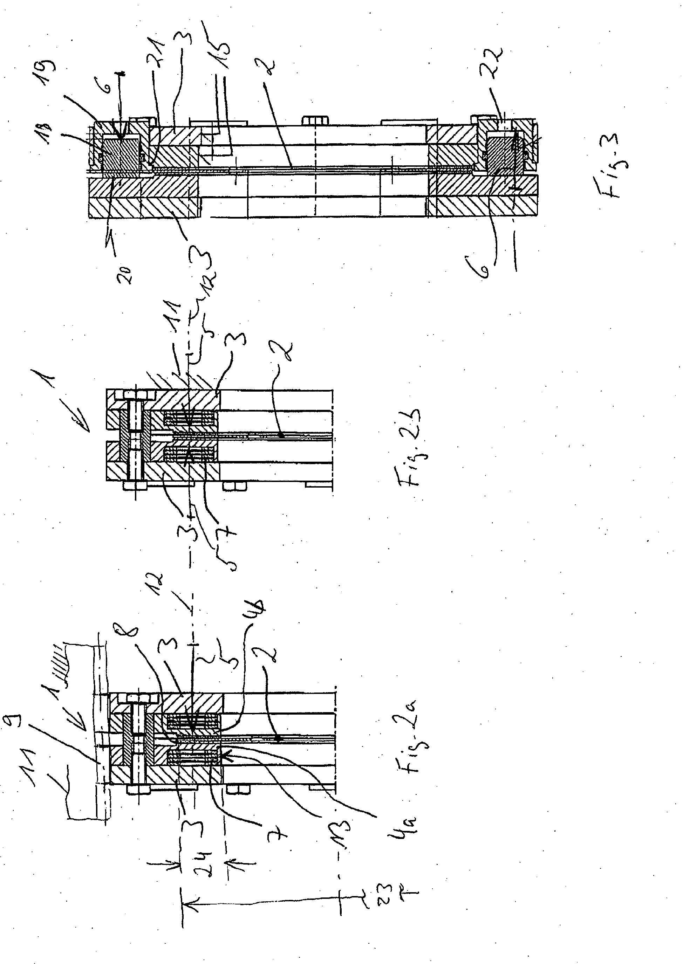

Es handelt sich hier um zwei ringförmige Platten, die entsprechend Fig.2a,2b über eine Distanzhülse miteinander verbunden sind.

Die Distanzhülse wird von zwei axialgerichteten Spannschrauben durchsetzt, so dass die beiden Ringplatten des Bremsengestells auf vorbestimmtem Abstand zueinander sitzen.
Weiterhin sind Bremsbeläge 4a,4b vorgesehen, jeweils ein Bremsbelag auf einer Seite der Bremsscheibe 2.

Die Bremsbeläge 4a,4b sind in Richtung zur Bremsscheibe 2 beweglich und, wie Fig.2a,2b zeigen entlang der Distanzhülsen in Axialrichtung geführt.

Dabei stehen die Bremsbeläge 4a,4b in der noch näher erläuterten Weise unter der Vorspannkraft 5 und werden in Richtung von der Bremsscheibe 2 weg durch eine Kolben-Zylinder-Einheit 6 außer Reibkontakt mit der Bremsscheibe 2 gebracht. Die hierfür erforderliche Lüftkraft wird - in an sich bekannter Weise - von einer hydraulischen oder pneumatischen Druckversorgung aufgebracht und wirkt entgegen der Vorspannkraft 5, um die Vorspannkraft 5 der Federn zu überwinden.

Die Bremse ist deshalb als Sicherheitsbremse 1 bezeichnet, weil z.B. im Falle eines Energieausfalls die von elastisch vorgespannten Federn aufgebrachte Vorspannkraft 5 dazu verwendet wird, die Drehbewegung der Bremsscheibe 2 zwangsweise zum Stillstand abzubremsen.

Wesentlich ist, dass die federelastische Vorspannkraft 5 von Tellerfedern 7 erzeugt wird, die sich auf zumindest einer Seite der Bremsscheibe 2 zwischen einer dem Bremsengestell 3 zugewandten Fläche des Bremsbelags 4a und einer dem Bremsbelag 4a zugewandten Fläche des Bremsengestells 3 abstützen.

Wie insbesondere Fig.2a,2b zeigen, können die Tellerfedern 7 mehrfach parallel zueinander geschaltet sein, um eine entsprechend hohe Vorspannkraft 5 bei trotzdem geringem Federweg zu erzeugen.
Ein wesentlicher Vorteil der Tellerfedern 7 in Verbindung mit der erfindungsgemäßen Sicherheitsbremse 1 liegt darin, dass die axiale Einbaulänge der Tellerfedern auch bei hohen und höchsten Vorspannkräften nur sehr gering ist.

Wie insbesondere die Figuren auch zeigen, sitzen die Tellerfedern 7 im Bereich des Außenumfanges 8 der Bremsscheibe 2.

Im Hinblick auf den Bremsbelag 4a,4b, der gem. Fig.2a,2b ringförmig am Außenumfang der Bremsscheibe 2 angreift, sollen die Kraftwirkungslinien der einzelnen Tellerfedern 7 praktisch nicht mehr als die Hälfte der Belagbreite 24 des Bremsbelags 4a,4b vom Außenumfang 8 der Bremsscheibe 2 verlaufen.

Dies bietet den Vorteil einer größtmöglichen Bremskraft und damit auch eines größtmöglichen Bremsmoments im Hinblick auf den Abstand der Kraftwirkungslinien 12 der Drehachse 25.

Die Anordnung des Bremsengestells 3 am Maschinengestell 11 kann entweder entsprechend Fig.2a als schwimmende Lagerung 9 oder entsprechend Fig.2b als starre Lagerung 10 vorgesehen sein.

Da die schwimmende bzw. starre Lagerung von Bremsengestellen dem Fachmann an sich bekannt ist, soll an dieser Stelle hier nicht weiter darauf eingegangen werden.

Im Hinblick auf die starre Lagerung entsprechend Fig.2b sollen aber die Tellerfedern 7 auf beiden Seiten der Bremsscheibe 2 jeweils zwischen Bremsengestell 3 und Bremsbelag 4a,4b angeordnet sein.

Durch diese symmetrische Anordnung der Tellerfedern 7 wird nämlich ein Verbiegen der Bremsscheibe 2 beim Bremsvorgang ausgeschlossen.
Dies bedeutet, dass sich jeweils Gruppen von Tellerfedern 7 mit jeweils gemeinsamer Kraftwirkungslinie bezüglich der Bremsscheibe 2 gegenüberliegen.

Die Bremsscheibe 2 wird auf diese Weise allein druckbelastet ohne seitlich auszubiegen.

Wie Fig.2a,2b insbesondere erkennen lassen, sitzen die Tellerfedern 7 in Ausnehmungen 13 und sind an ihrem Außenumfang in den Ausnehmungen 13 axial geführt.

Hierzu ist zwischen dem Außendurchmesser der Tellerfedern 7 und dem Innendurchmesser der Ausnehmung 13 ein gewisses Spiel erforderlich, so dass die einzelnen Federpakete aus Tellerfedern 7 praktisch zwängungsfrei in ihren Ausnehmungen 13 sitzen.

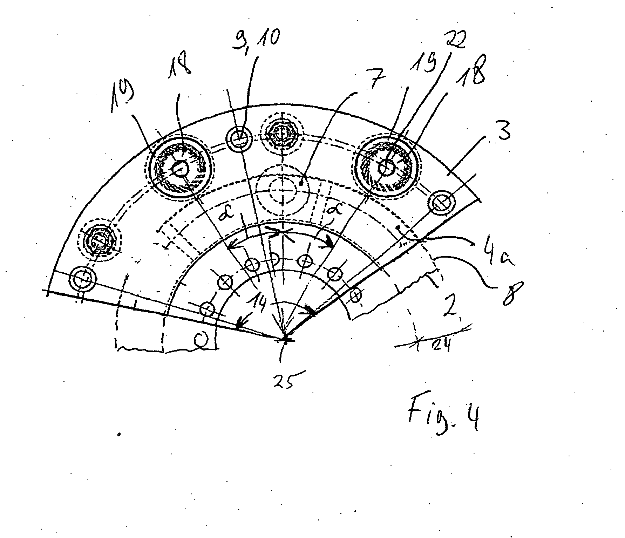

Insbesondere Fig.4 zeigt ein Ausführungsbeispiel, bei welchem das Bremsengestell 3 und die Bremsbeläge 4a,4b sich lediglich ringsegmentförmig 14 um die Bremsscheibe 2 herumerstrecken.

Im vorliegenden Fall ist jeweils auf jeder Seite der Bremsscheibe 2 nur ein einziges Paket aus Tellerfedern 7 vorgesehen.

Die Führung der Bremsbeläge 4a,4b entspricht der Anordnung gemäß Fig.2a,b.

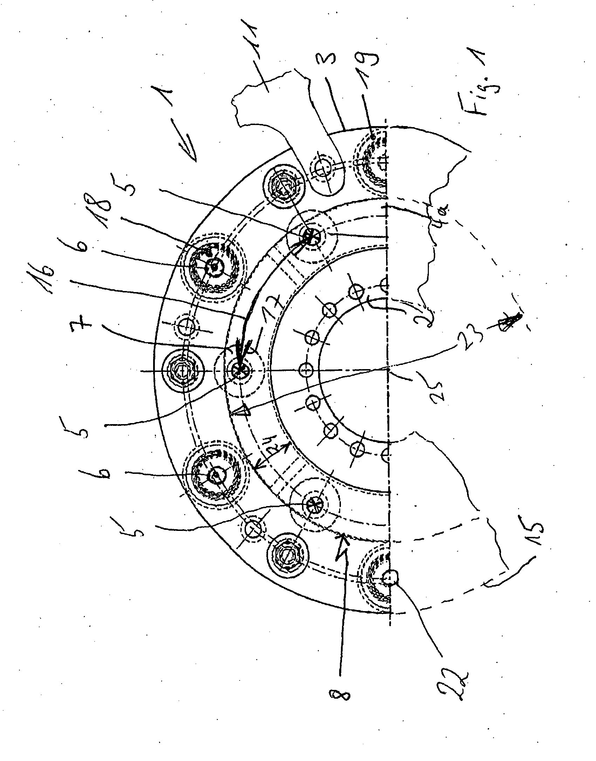

Alternativ hierzu kann entsprechend Fig.1-3 auch vorgesehen sein, dass Bremsengestell 3 und Bremsbeläge 4a,4b sich jeweils als geschlossener Ring 15 um die Bremsscheibe 2 herumerstrecken.

Auf diese Weise lassen sich jeweils mehrere Pakete von Tellerfedern 7 auf einem gemeinsamen Kreisdurchmesser 16 mit einem vorbestimmten Abstand zueinander anordnen.

Über die Anzahl der Pakete von Tellerfedern 7 läßt sich dann die jeweils erforderliche Bremskraft in weiten Bereichen variieren.

Die insbesondere auch ringsymmetrische Anordnung der Tellerfedern 7 gemäß Fig.1 sorgt für einen gleichmäßigen Anpressdruck über die gesamte Ringlänge der Bremsbeläge 4a,4b.

Weiterhin zeigen die Figuren auch eine besondere Ausführungsform der Kolben-Zylinder-Einheiten zum Lüften der Sicherheitsbremse.

Hier sind Plungerkolben 18 mit zugehörigen Zylindereinheiten vorgesehen.

Die Plungerkolben 18 stützen sich mit einer Stirnfläche 20 auf einer Seite der Bremsscheibe 2 am Bremsengestell ab, während die Zylindereinheiten 19 sich auf der anderen Seite der Bremsscheibe 2 am Bremsengestell abstützen 21.

Zu diesem Zweck weisen die Zylindereinheiten 19 an ihrem Außenumfang einen umlaufenden Bund 21 auf, der sich hinter einer Durchgangsbohrung im Trägerkörper des Bremsbelags 4b verhakt.

Es ist ersichtlich, dass mit Befüllung des Raumes zwischen Plungerkolben 18 und Zylindereinheit 19 die beiden Bremsbeläge 4a,4b von der Bremsscheibe 2 weggehalten werden und auf diese Weise die Bremse gelüftet wird.

Bei den Plungerkolben 18 handelt es sich um einfache Längsabschnitte aus einem geeigneten Rundmaterial, welche über einfache Dichtringe, die in einer umlaufenden Nut der Zylindereinheit 19 eingelegt sind, abgedichtet werden.

Plungerkolben 18 und Zylindereinheit 18 verfügen also über jeweils eine Abstützstelle 20 bzw. 21 an dem Träger des Bremsbelags 4a,4b, so dass unter Druckbeaufschlagung des von Plungerkolben 18 und Zylindereinheit 19 gebildeten Zylinderraums die Bremsbeläge 4a,4b gegen die Vorspannkraft 5 der Tellerfedern 7 auseinandergefahren werden.

Dabei sind die Plungerkolben 18 mit zugehöriger Zylindereinheit 19 jeweils zwischen zwei benachbarten Paketen von Tellerfedern 7 angeordnet.

Da die Einheiten aus Plungerkolben 18 und zugehörigen Zylindern 19 jeweils auf beide Bremsbeläge 4a,4b wirken, bedient folglich ein Plungerkolben 18 mit zugehöriger Zylindereinheit 19 jeweils vier in der Nachbarschaft angeordnete Pakete von Tellerfedern.

Im Hinblick auf die Anordnung der Plungerkolben 18 in den mittigen Zwischenräumen zwischen den Paketen von Tellerfedern 7 (s. gleiche Winkelabstände α zu den Tellerfedern 7) kann folglich zwischen einer vorgegebenen Anzahl von Paketen von Tellerfedern eine ebenso große Anzahl von Plungerkolben 18 mit Zylindereinheiten 19 vorgesehen sein.

Jeder Plungerkolben 18 mit zugehöriger Zylindereinheit 19 muss daher so ausgelegt sein, dass er die Vorspannkraft 5 jeweils zweier Pakete von Tellerfedern 7 überwindet.

Darüberhinaus sitzen Plungerkolben 18 und zugehörige Zylindereinheiten 19 außerhalb des Außendurchmessers 23 der Bremsscheibe 2.

Die Anordnung der Kolben-Zylinder-Einheiten außerhalb des Außendurchmessers 23 der Bremsscheibe 2 bietet den besonderen Vorteil, dass mit nur einem einzigen Plungerkolben 18 jeweils beide ringfömigen Bremsbeläge 4a, 4b lüftbar sind.

### Bezugszeichenliste

- 1: Sicherheitsbremse
- 2: Bremsscheibe
- 3: Bremsengestell
- 4a: Bremsbelag
- 4b: Bremsbelag
- 5: Vorspannkraft
- 6: Lüftkraft
- 7: Tellerfeder
- 8: Außenumfang von 2
- 9: schwimmende Lagerung am Maschinengestell
- 10: starre Lagerung am Maschinengestell
- 11: Maschinengestell
- 12: Kraftwirkungslinie
- 13: Ausnehmung
- 14: Ringsegment
- 15: geschlossener Ring
- 16: gemeinsamer Kreisdurchmesser
- 17: vorbestimmter Abstand
- 18: Plungerkolben
- 19: Zylindereinheit
- 20: Abstützstelle 18
- 21: Abstützstelle 19
- 22: Lüftanschluss
- 23: Außendurchmesser der Bremsscheibe
- 24: Belagbreite
- 25: Drehachse

## Patentansprüche

1. Sicherheitsbremse (1) mit einer Bremsscheibe (2) und einem beidseitig der Bremsscheibe (2) angeordneten Bremsengestell (3) und mit beidseitig der Bremsscheibe (2) zwischen Bremscheibe (2) und Bremsengestell (3) angeordneten und in Richtung zur Bremsscheibe (2)beweglichen Bremsbelägen (4a,4b), die in Bewegungsrichtung zur Bremsscheibe (2) unter federelastischer Vorspannkraft (5) stehen und in Richtung von der Bremsscheibe (2) weg mittels Kolben-Zylinder-Einheit (6) gelüftet werden, **dadurch gekennzeichnet, dass** die federelastische Vorspannkraft (5) von Tellerfedern (7) erzeugt wird, die sich auf zumindest einer Seite der Bremsscheibe (2) zwischen einer dem Bremsengestell (3) zugewandten Fläche des Bremsbelags (4a) und einer dem Bremsbelag (4a) zugewandten Fläche des Bremsengestells (3) abstützen.

2. Sicherheitsbremse (1) nach Anspruch 1, **dadurch gekennzeichnet, dass** die Tellerfedern (7) am Außenumfang (8) der Bremsscheibe (2) sitzen.

3. Sicherheitsbremse (1) nach Anspruch 1 oder 2, **dadurch gekennzeichnet, dass** das Bremsengestell (3) parallel zur Drehachse (25) der Bremsscheibe (2) an einem Maschinengestell (11) schwimmend beweglich gelagert (9) ist.

4. Sicherheitsbremse (1) nach Anspruch 1 oder 2, **dadurch gekennzeichnet, dass** das Bremsengestell (3) an einem Maschinengestell (11) starr gelagert (10) ist und dass die Tellerfedern (7) auf beiden Seiten der Bremsscheibe (2) jeweils zwischen Bremsengestell (3) und Bremsbelag (4a,4b) angeordnet sind.

5. Sicherheitsbremse (1) nach Anspruch 3 oder 4, **dadurch gekennzeichnet, dass** jeweils Gruppen von Tellerfedern (7) sich jeweils mit gemeinsamer Kraftwirkungslinie (12) bezüglich der Bremsscheibe (2) gegenüberliegen.

6. Sicherheitsbremse (1) nach einem der Ansprüche 1 bis 5, **dadurch gekennzeichnet, dass** die Tellerfedern (7) jeweils in Ausnehmungen (13) sitzen und in den Ausnehmungen (13) sitzen und in den Ausnehmungen (13) an ihrem Außenumfang geführt sind.

7. Sicherheitsbremse (1) nach einem der Ansprüche 1 bis 6, **dadurch gekennzeichnet, dass** Bremsengestell (3) und Bremsbeläge (4a,4b) sich jeweils ringsegmentförmig (14) entlang der Bremsscheibe (2) erstrecken.

8. Sicherheitsbremse (1) nach einem der Ansprüche 1 bis 6, **dadurch gekennzeichnet, dass** Bremsengestell (3) und Bremsbeläge (4a,4b) sich jeweils als geschlossener Ring (15) entlang der Bremsscheibe (2) erstrecken.

9. Sicherheitsbremse (1) nach Anspruch 7 oder 8, **dadurch gekennzeichnet, dass** jeweils mehrere Tellerfedern (7) auf gemeinsamem Kreisdurchmesser (16) mit einem vorbestimmten Abstand (17) zueinander vorgesehen sind.

10. Sicherheitsbremse (1) mit den Merkmalen der Ansprüche 8 und 9, **dadurch gekennzeichnet, dass** jeweils mehrere Tellerfedern (7) auf gemeinsamem Kreisdurchmesser (16) in Form eines geschlossenen Kreises mit gleichmäßigen Abständen zueinander vorgesehen sind.

11. Sicherheitsbremse (1) nach einem der Ansprüche 1 bis 10, **dadurch gekennzeichnet, dass** zum Lüften der Sicherheitsbremse (1) Plungerkolben (18) und zugehörige Zylindereinheiten (19) vorgesehen sind, wobei sich die Plungerkolben (18) auf einer Seite der Bremsscheibe (2) am Bremsengestell (3) und die Zylindereinheiten (19) auf der anderen Seite der Bremsscheibe (2) am Bremsengestell (3) abstützen.

12. Sicherheitsbremse (1) nach Anspruch 11, **dadurch gekennzeichnet, dass** jeweils ein Plungerkolben (18) mit zugehöriger Zylindereinheit (19) zwei Paaren von benachbarten und zusammenwirkend geschalteten Tellerfedern (7) zugeordnet ist.

13. Sicherheitsbremse (1) nach Anspruch 11 oder 12, **dadurch gekennzeichnet, dass** Plungerkolben (18) und zugehörige Zylindereinheiten (19) außerhalb des Außendurchmessers (23) der Bremsscheibe (2) sitzen.
